**Europäisches Patentamt**

**European Patent Office**

**Office européen des brevets**

(11) Veröffentlichungsnummer : **0 118 747**
**B1**

(12) **EUROPÄISCHE PATENTSCHRIFT**

(45) Veröffentlichungstag der Patentschrift :
30.07.86

(51) Int. Cl.⁴ : **D 21 G   1/02**

(21) Anmeldenummer : **84101193.5**

(22) Anmeldetag : **06.02.84**

(54) **Walze grosser Abmessungen für Maschinen zur Herstellung von endlosem Bahnmaterial.**

(30) Priorität : **07.02.83 DE 3304076**

(43) Veröffentlichungstag der Anmeldung :
**19.09.84 Patentblatt 84/38**

(45) Bekanntmachung des Hinweises auf die Patenterteilung : **30.07.86 Patentblatt 86/31**

(84) Benannte Vertragsstaaten :
**AT BE CH DE FR GB IT LI LU NL SE**

(56) Entgegenhaltungen :
**AT-B-    283 894**
**DE-A- 1 561 732**
**DE-A- 1 940 175**

(73) Patentinhaber : **Schwäbische Hüttenwerke Gesellschaft mit beschränkter Haftung**
**Wilhelmstrasse 67 Postfach 3280**
**D-7080 Aalen-Wasseralfingen (DE)**

(72) Erfinder : **Vomhoff, Erich**
**Beethovenstrasse 5**
**D-7923 Königsbronn (DE)**

(74) Vertreter : **Sandmair, Kurt, Dr. et al**
**Patentanwälte Schwabe, Sandmair, Marx Stuntzstrasse 16**
**D-8000 München 80 (DE)**

Jouve, 18, rue St-Denis, 75001 Paris, France

## Beschreibung

Die Erfindung betrifft eine schlanke Walze großer Abmessungen für Maschinen zur Herstellung von endlosem Bahnmaterial wie z. B. Papiermaschinen oder Folienziehkalander mit einem Walzenmantel, einem in Radialrichtung starr zentral in dem Walzenmantel gelagerten Verdrängerkörper, der zwischen sich und dem Walzenmantel einen Spalt für das Durchleiten einer Wärmeträgerflüssigkeit freiläßt, und mit Lagerzapfen, welche mittels Stirnflanschen den Walzenmantel tragen und die Zu- und Ableitungen für die Wärmeträgerflüssigkeit enthalten.

Derartige Walzen werden in der Regel in Längen von 3 bis 12 m bei Durchmessern von 30 bis 120 cm gefertigt. Da die Walzen trotz ihrer Schlankheit sehr steif sein müssen, muß der Walzenmantel dickwandig sein. Er wird daher normalerweise gegossen. Bevorzugt wird der Walzenmantel von einem Hartgußzylinder gebildet, also einem aus Gußeisen gegossenen Zylinder, der in seinem Innenbereich eine Graugrußstruktur aufweist, während der äußere Bereich die Struktur von weißem Gußeisen besitzt. Wegen ihrer Größe werden diese Hartgußzylinder meist stehend im steigenden Guß mit tangential einströmender Schmelze gegossen, so daß die Struktur im wesentlichen rotationssymmetrisch ist. Der Zylinder wird nach seiner Herstellung überdreht und ausgebohrt.

Je nach der Verwendung wird die Walze im Betrieb auf einer niedrigen Temperatur gehalten, also gekühlt, oder aber auf einer hohen Temperatur, also erwärmt. Die Betriebstemperatur ist dabei gleichmäßig.

Derartige Walzen sind aus mehreren Gründen nicht frei von Unwuchten. Einer der Gründe hierfür liegt darin, daß eine exakte Konzentrizität der Grenzfläche zwischen grauem und weißem Gußeisen in der Praxis nicht zu erreichen ist.

Solange die Walzen nicht allzu lang sind, und mit nicht zu hoher Umfangsgeschwindigkeit umlaufen, sich im Betrieb also angenähert starr verhalten, läßt sich eine ermittelte Unwucht leicht nach dem Prinzip des dynamischen Auswuchtens in zwei Ebenen durch Kompensationsbohrungen ausgleichen, welche an der entsprechenden Stelle, also in dem schwereren Bereich der Walze in die entsprechende Stirnfläche des Walzenmantels eingebracht werden.

Eine derartige Unwuchtkompensation reicht jedoch nicht mehr aus, wenn die Walze einen bestimmten Schlankheitsgrad oder eine bestimmte Drehzahl oder gar beides überschreitet. Mit wachsendem Schlankheitsgrad und Drehzahl gewinnt die Frage an Einfluß, wo über der Walzenlänge die Unwucht sitzt. Die Walze verhält sich dann nämlich nicht mehr starr. Befindet sich die Unwucht nahe einem oder beiden Enden der Walze, so genügt die oben dargelegte Kompensation. Befindet sich die Unwucht jedoch in wesentlichem Abstand von den Walzenenden, so reicht diese Kompensation nicht mehr aus.

Dann hat nämlich die Walze das Bestreben, sich im Betrieb unter dem Einfluß der Fliehkraft so durchzubiegen, daß die Unwucht mit steigender Drehzahl noch vergrößert wird.

Um dem entgegenzuwirken, hat man bisher den Walzenmantel vor dem Ausbohren exakt überschliffen und auf die Betriebsdrehzahl gebracht. Während der Betriebsdrehzahl wurde dann die sich am Walzenballen einstellende Mittenauslenkung, also die aufgrund der dynamischen Fliehkräfte auftretende Ausbiegung der zuvor durch Bohrungen an den Enden des Walzenballens ausgewuchteten Walze gemessen. Diese Ausbiegung des Walzenballens im Betriebszustand wurde dadurch kompensiert, daß der Walzenballen neu überschliffen wurde. Die Rotationsachse wurde dabei so gewählt, daß im mittleren Bereich des Walzenballens keine Mittenauslenkung mehr auftrat. Dieses als Wuchtzentrierverfahren bekannte Vorgehen wird noch durch ein dynamisches Auswuchten in den Ebenen an den Walzenballenenden ergänzt. Das Wuchtzentrieren beseitigt auch Formänderungen der Walze beim Erwärmen, also den Bimetalleffekt.

Die so geschaffene Auswuchtung der Walze geht beim nachfolgenden Ausbohren mehr oder weniger wieder verloren. Schon ein minimaler Mittenversatz der Bohrung erzeugt eine neue Unwucht, die bei dem Schlankheitsgrad dieser Walzen zu einer neuen Mittenauslenkung im Betrieb führt.

Die Erfindung will mit einfachen Mitteln diese Mittenauslenkung beseitigen. Sie erreicht dies dadurch, daß im Abstand von den seitlichen Enden des Hartgußzylinders befindliche Unwuchten und/oder durch unterschiedliche Wärmedehnungen des Walzenmantels bei der Betriebstemperatur verursachte Durchbiegungen des Walzenmantels durch an entsprechenden, ermittelten Stellen des Verdrängerkörpers vorab angebrachte Ausgleichsmassen oder -ausnehmungen im wesentlichen ausgeglichen sind.

Besteht nicht die Gefahr von thermisch verursachten Ausbiegungen der Walze, so erlaubt es die Erfindung, auf das vorhergehende Wuchtzentrieren zu verzichten.

Die Erfindung erlaubt es also, die Unwucht eines fertigen Walzenmantels nachträglich zu kompensieren. Dabei wird der dynamisch gewuchtete und ausgebohrte Walzenmantel auf Betriebsdrehzahl gebracht und es wird festgestellt, wieweit sich der Mantel unter diesen Bedingungen im Betrieb durchbiegt. Übersteigt die gemessene Durchbiegung das zulässige Maß, so wird zweckmäßig zuerst festgestellt, ob die maximale Durchbiegung in der Mitte des Walzenkörpers oder gegenüber dieser mehr zu einem Walzenende hin versetzt ist. In der Praxis genügt die Messung und der Ausgleich in der Mitte der Walzenlänge. Hat man nun die Richtung der Walzendurchbiegung und die Stelle der größten Durchbiegung (diese liegt normalerweise in der Mitte der Walzenlänge) ermittelt, so läßt sich hieraus leicht die erforderliche Kompensationsmasse berechnen, die gegenüber der Stelle des « Walzenbuckels » im Inneren der Walze am Verdrängerkörper angebracht werden muß, um die Auslenkung des Walzenkörpers aufgrund von Unwucht durch eine Gegenunwucht zu kompensieren.

Es versteht sich, daß bei der Erfindung der Verdrängerkörper vor dem Anbringen der Ausgleichsmassen oder Ausgleichsausnehmungen einwandfrei gewuchtet sein muß. Dies bietet jedoch im Gegensatz zur Walze selbst keine technischen Probleme, da der Verdrängerkörper normalerweise aus leicht bearbeitbarem Stahlrohr besteht, während eine Kompensation von Massenunwuchten am Walzenmantel selbst zwar theoretisch möglich ist, in der Praxis sich jedoch wegen des hierfür erforderlichen allzu hohen Aufwandes verbietet.

Wenn auch dem Grunde nach Ausgleichsausnehmungen ihren Dienst genauso gut tun wie Ausgleichsmassen, so wird jedoch der Ausgleich durch die Anbringung von Ausgleichsmassen bevorzugt. Dies kann im einfachsten Falle bei einem einteiligen Verdrängungskörper beispielsweise dadurch geschehen, daß dessen Wandung angebohrt und Schrauben von entsprechenden Abmessungen und damit entsprechender Masse flüssigkeitsdicht in diese Bohrungen eingeschraubt werden.

Hat man beispielsweise einen mehrteiligen Verdrängerkörper, was sich bei relativ langen Walzen empfiehlt, so werden die Ausgleichsmassen zweckmäßig jeweils an der Stoßstelle zwischen zwei Verdrängerkörpern an dem einen oder dem anderen derselben von der Aussenseite her — besser von der Innenseite her — auf dem Umfangsblech des Verdrängerkörpers befestigt, beispielsweise aufgeschweißt. In vielen Fällen empfiehlt es sich jedoch, daß die Ausgleichsmassen innerhalb der Umfangsfläche des Verdrängerkörpers angebracht sind, damit sie den Strömungsweg der Wärmeträgerflüssigkeit zwischen Walzenmantel und Verdrängerkörper nicht behindern. Ferner empfiehlt es sich, daß der Verdrängerkörper jeweils radial außerhalb der Ausgleichsmassen bzw. radial gegenüber den Ausgleichsausnehmungen auf die Innenoberfläche des Walzenmantels abgestützt ist, damit die Wirkung der Ausgleichsmassen und/oder -ausnehmungen nicht durch Verformungen des evtl. zu wenig biegsteifen Verdrängerkörpers selbst aufgefangen wird.

Besonders einfach und korrigierbar wird der Ausgleich, wenn man die Ausgleichsmassen durch eine Füllung wenigstens eines aus einer Mehrzahl von gleichmäßig über den Umfang des Verdrängerkörpers verteilten Flüssigkeitsbehältern bildet, welche über Rohrleitungen durch einen der Lagerzapfen der Walze beschickbar sind. Ein derartiges Vorgehen reicht in den allermeisten Fällen aus, da es in der Regel genügt, die dynamischen Unwuchten, die im Abstand von den Enden des Walzenballens sitzen, in der Mitte der Walze zu kompensieren. Sieht man also von vornherein in der Mitte der Walze eine entsprechende Anzahl von Flüssigkeitsbehältern vor, so läßt sich die Kompensation in der Mitte durchführen. Bei relativ langen Walzen kann man natürlich auch anstelle einer Gruppe von Behältern in der Mitte des Walzenkörpers mehrere gleichmäßig über die Walzenlänge verteilte Gruppen von über den Umfang des Verdrängerkörpers gleichmäßig verteilten Flüssigkeitsbehältern vorsehen. Das erlaubt eine genaue Berücksichtigung der Verformung des Walzenkörpers im Betrieb. Meist wird dies jedoch nicht erforderlich sein.

Eine derartige Ausbildung mit Verformungen der Walze im Betrieb kompensierenden Flüssigkeitsbehältern ist dem Grunde nach auch dann möglich, wenn die Walze keinen Verdrängerkörper hat. In diesem Falle muß allerdings in die Walze eine gesonderte Halterung eingesetzt werden, welche gewährleistet, daß die Verdrängerkörperanordnung sich weder in Umfangsrichtung noch in Walzenlängsrichtung bewegt. Mit anderen Worten : In diesem Falle muß ein Ersatz für den Verdrängerkörper vorgesehen sein. Die Halterung kann z. B. ein Spreizring sein.

Wesentlich ist bei der Erfindung natürlich, daß der Verdrängerkörper in Umfangsrichtung und in Radialrichtung im Inneren des Walzenmantels einwandfrei zentriert und fixiert ist. Hier liegt jedoch keine technische Problematik, da es schon bisher üblich war, die Verdrängerkörper insoweit einwandfrei zu fixieren. Die Fixierung in Radialrichtung erfolgt normalerweise durch im Strömungsspalt angeordnete Stützkörper, mit denen sich der Verdrängerkörper auf die Innenoberfläche des Walzenmantels abstützt. Die Fixierung in Umfangsrichtung erfolgt normalerweise durch Paßfedern gegen einen oder beide Flanschzapfen. Eine Fixierung in Axialrichtung ist nicht erforderlich, da das in der Praxis übliche Axialspiel des Verdrängerkörpers für die Erfindung ohne Belang ist.

Für den Unwucht-Ausgleich können beispielsweise bei mehreren Verdrängerkörpern auch an deren Enden nach innen ragende Lappen vorgesehen sein, in die nach Bedarf entsprechende Bohrungen eingebracht werden können. Man kann auch einfach abzubrechende Lappen vorsehen. Am einfachsten ist jedoch, wie gesagt, die Anbringung zusätzlicher Kompensationsmassen, die nur angeschweißt werden müssen. Bei einem einteiligen Verdrängerkörper kann beispielsweise in der Mitte ein Ring eingeschweißt sein, so daß nachträglich zum Unwucht- und Biegungsausgleich kurze Sackbohrungen in diesen Ring eingebracht werden können. Hier gibt es viele Möglichkeiten für die Verwirklichung der Erfindung, die keine Schwierigkeiten bieten, da die entsprechenden Veränderungen des Verdrängerkörpers leicht vor dem Einbau desselben durchgeführt werden können.

Nachfolgend sind zwei bevorzugte Ausführungsformen der Erfindung anhand der Zeichnungen als erläuternde Beispiele beschrieben :

Figur 1 zeigt eine gemäß der Erfindung ausgewuchtete, beheizbare Hartgußwalze für eine Papiermaschine im Axialschnitt ;

Figur 2 zeigt eine andere Ausführungsform einer für eine Papiermaschine bestimmten, gemäß der Erfindung ausgewuchteten Hartgußwalze im Axialschnitt ;

Figur 3 zeigt den Schnitt III-III aus Fig. 2.

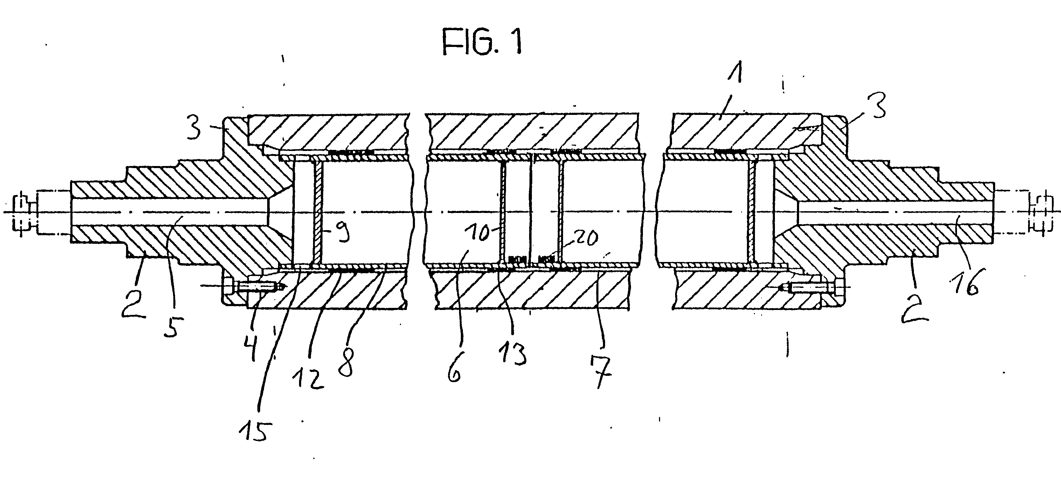

Die in Fig. 1 gezeigte beheizbare Papiermaschinenwalze besteht im wesentlichen aus dem Hartgußmantel 1 und zwei gleichen Lagerzapfen 2, die jeweils einstückig mit dem entsprechenden Stirnflansch 3 ausgebildet sind.

Der Walzenmantel 1 ist steigend im stehenden Guß mit tangentialem Einguß von unten her gegossen. Nach dem Gießen wurde er außen und innen sowie an den Stirnseiten zueinander zentrisch überdreht bzw. ausgebohrt. Auf dem größten Teil seiner radialen Erstreckung besteht der Hartgußmantel 1 aus Grauguß, der jedoch in seinem äußeren Randbereich in weißes Gußeisen übergeht.

Die ebenfalls gegossenen Lagerzapfen 2 und Stirnflansche 3 sind in üblicher Weise bearbeitet und mit den Stirnenden des Walzenmantels 1 wie bei 4 angedeutet verschraubt.

Durch die Lagerzapfen 2 erstreckt sich ein Zuführkanal 5 bzw. ein Abführkanal 16 für die Wärmeträgerflüssigkeit zum bzw. vom inneren Hohlraum der Walze. Der Innenhohlraum der Walze ist zum größten Teil durch einen zweiteiligen Verdrängerkörper 6 und 7 ausgefüllt, der aus zwei im wesentlichen gleichen, in der Mitte aneinander stoßenden Hälften besteht. Jede Hälfte des Verdrängerkörpers besteht aus einem Blechzylinder 8, der nahe seinen beiden Stirnenden mit entsprechenden Stirnplatten 9 und 10 dicht verschweißt ist. Gleichmäßig über den Umfang verteilt ist jede der beiden Verdrängerkörperhälften mittels außen aufgeschweißter, in Walzenlängsrichtung verlaufender Flossen 12 gegen die Innenoberfläche des Walzenmantels 1 in üblicher Weise abgestützt. Die nahe der Walzenmitte vorgesehenen gleichmäßig über den Umfang verteilten Flossen 13 sind dabei im Bereich der Stirnwand 10 so angebracht, daß sie auch den die Stirnwand 10 noch überragenden Bereich des Blechzylinders 8 abstützen, so daß in diesem Bereich die später noch zu beschreibenden Ausgleichsmassen angeschweißt, werden können.

Der die Stirnwand 9 überragende Bereich des Stahlrohres 8 ist mit einer Vielzahl von radialen Bohrungen 15 versehen, durch welche die aus der Bohrung 5 einströmende Wärmeträgerflüssigkeit in den Spalt zwischen dem Verdrängerkörper und dem Walzenmantel 1 eintreten bzw. am anderen Ende wieder aus diesem Spalt austreten kann.

Für die Fertigung der soeben in ihrem groben Aufbau beschriebenen Walze wird nach dem äußeren Überschleifen des Walzenballens 1 dieser wuchtzentriert. Dann wird der Ballen ausgebohrt. Der so geschaffene Mantel wird nun erneut auf die Betriebsdrehzahl gebracht. Der Walzenballen kann hierbei beispielsweise auf vier in entsprechenden Abständen angeordneten Rollen gelagert werden. Nun wird mittels einer geeigneten Meßeinrichtung geprüft, welche Mittenausladung der Walzenmantel hat. Ferner wird festgestellt, an welcher Umfangsstelle die größte Auslenkung des Mantels ist. Dann errechnet man, wie groß die Kompensationsmasse sein muß, die, wenn sie in der Mitte des Walzenmantels gegenüber der Stelle stärkster Ausbiegung angebracht wird, gerade ausreicht, um die Ausbiegung des Walzenmantels auszugleichen. Dabei muß natürlich berücksichtigt werden, daß die Ausgleichsmasse sich — im gezeigten Ausführungsbeispiel — mit ihrem Schwerpunkt auf einem Radius befindet, der noch etwas kleiner ist als der Innenradius des Blechzylindermantels 8, da im Ausführungsbeispiel die Kompensationsmassen von innen auf den Blechzylinder nahe dem inneren Ende der jeweiligen Verdrängerkörperhälfte aufgeschweißt werden sollen.

Nun kann die Kompensationsmasse nach ihrer Größe genau berechnet werden, wobei die Lage des Schwerpunktes dieser Masse mitberücksichtigt werden muß. Derartige Berechnungen sind jedem Techniker elementar und geläufig. Nun werden im Ausführungsbeispiel zwei Stahlmassen 20 nahe dem entsprechenden Ende der jeweiligen Verdrängerkörperhälfte von innen an der richtigen Umfangsstelle auf deren Blechzylinder 8 aufgeschweißt, der zu diesem Zweck die entsprechende Stirnwand 10 um ein ausreichendes Maß überragt. Die beiden Verdrängerkörperhälften werden dann von den beiden Enden her in der richtigen Drehlage, also mit den Ausgleichsmassen 20 genau gegenüber der Stelle der stärksten Auslenkung des Walzenmantels beim Probelauf unter Wahrung entsprechender Temperaturdifferenzen in den Walzenmantel 1 eingeschoben und dort festgeschrumpft. Danach kann die Walze durch Anbringen der Stirnflansche 3 mit den Lagerzapfen 2 fertig montiert werden.

In der Regel ist es zweckmäßig, vor dem zuletzt erläuterten Feststellen der Stelle größter Ausbiegung in der 3. Ebene des Walzenmantels 1 diesen dynamisch zu wuchten und festgestellte Unwuchten durch Axialbohrungen von den Stirnseiten her in den Walzenmantel hinein auszugleichen.

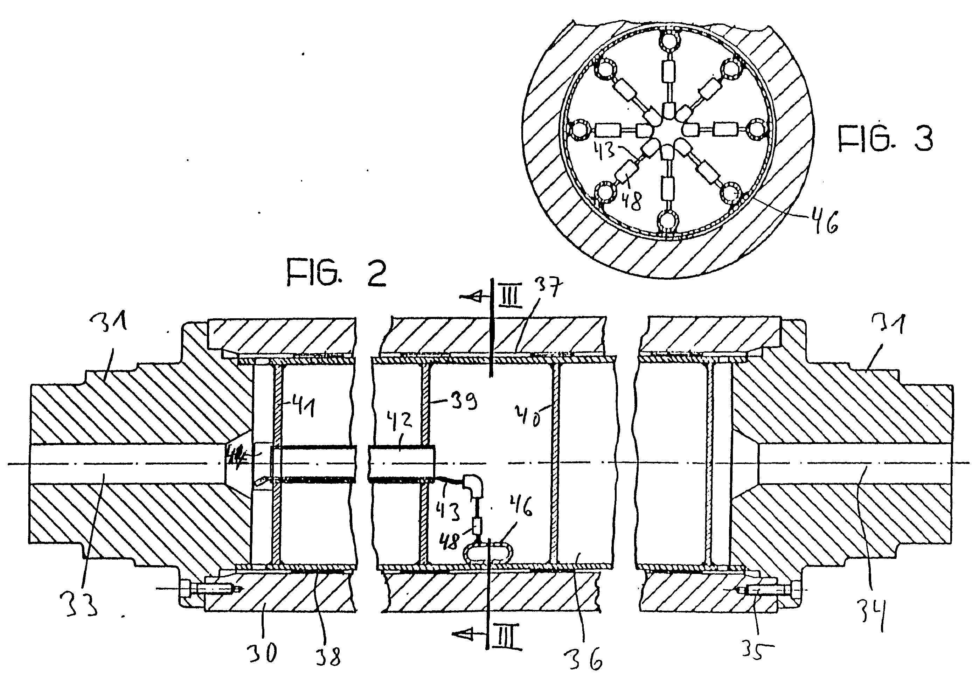

Die in Fig. 2 und 3 gezeigte Papiermaschinenwalze besitzt einen Hartgußmantel 30 sowie zwei Endteile 31, die sowohl den den Walzenmantel 30 tragenden Stirnflansch als auch die Lagerzapfen bilden. In jedem der Endteile 31 ist wie bei der zuvor beschriebenen Konstruktion eine Zuführbohrung 33 bzw. eine Abführbohrung 34 für Wärmeträgerflüssigkeit vorgesehen. Vor der Montage wurde der Walzenmantel 30 dynamisch gewuchtet, wuchtzentriert und ausgebohrt.

Der Mantel ist durch Schrauben 35 mit den Endteilen 31 verbunden. Das Innere des Walzenkörpers ist durch einen Verdrängerkörper 36 ausgefüllt, der zwischen sich und dem Walzenmantel einen von der Wärmeträgerflüssigkeit durchströmbaren Zylinderspalt 37 freiläßt. Gegen die Innenoberfläche des Walzenmantels 30 ist der Verdrängerkörper 36 ebenfalls mit axial verlaufenden Stützkörpern 38 abgestützt.

Neben seinen beiden Endstirnwänden besitzt der hier einstückige und damit relativ lange Verdrängerkörper 36 zwei innere Stützwände 39 und 40. Die Stirnwand 41 trägt zusammen mit der Stützwand 39 ein zentrales Zufuhrrohr 42, durch welches sich gleichmäßig über den Umfang verteilt acht dünne Zufuhrrohre 43 erstrecken, von denen in Fig. 2 nur eines dargestellt ist.

Die Zuführrohre 41 kommen aus einem Kopf 44, in den jedes der Rohre 43 mündet. Der Kopf 44 besitzt entsprechend den acht Leitungen 43 acht Einlaßventile, die nicht gezeigt sind. Die Rohre 43 münden, wie aus der Zeichnung ersichtlich, in Flüssigkeitsbehälter 46, die ebenfalls gleichmäßig über den Umfang verteilt sind. Diese Walze kann fertig montiert werden.

In fertig montiertem Zustand, in dem sie auch schon auf den Lagerzapfen 31 läuft, wird nun die Mittenauslenkung der Walze bei Betriebsdrehzahl festgestellt. Dann wird die in die Mitte des Walzenmantels einzubringende erforderliche Kompensationsmasse berechnet. Diese wird dann mittels einer entsprechend langen Einführdüse unter ausreichend hohem Druck in die erforderliche Zahl von Kompensationsbehältern 46 eingefüllt.

Jeder Behälter 46 hat an seinem Einlaß ein Rückschlagventil 48.

Die Konstruktion wird einfacher, wenn man zum Füllen den entsprechenden Stirnflansch abnimmt.

Es versteht sich, daß auch bei dieser Konstruktion der Verdrängerkörper vor dem Einbringen einwandfrei gewuchtet sein muß, damit dieser nicht durch seine Unwucht das Laufverhalten der Walze schädlich beeinflußt.

## Patentansprüche

1. Schlanke Walze großer Abmessungen für Maschinen zur Herstellung von endlosem Bahnmaterial, wie z. B. Papiermaschinen oder Folienziehkalander, mit einem innen und außen bearbeiteten Walzenmantel (1, 30), mit einem in Radialrichtung zentral in dem Walzenmantel gelagerten Verdrängerkörper (6, 7 ; 36), der zwischen sich und dem Walzenmantel einen Spalt für das Durchleiten einer Wärmeträgerflüssigkeit freiläßt, und mit Lagerzapfen (2, 31), welche mittels Stirnflanschen (3, 31) den Walzenmantel (1, 30) tragen und die Zu- und Ableitungen (5, 6 ; 33, 34) für die Wärmeträgerflüssigkeit enthalten, dadurch gekennzeichnet, daß im Abstand von den seitlichen Enden des Walzenmantels (1, 30) befindliche Unwuchten und/oder durch unterschiedliche Wärmedehnungen des Walzenmantels verursachte Durchbiegungen des Walzenmantels durch an entsprechenden, ermittelten Stellen des Verdrängerkörpers (6, 7 ; 36) vorab angebrachte Ausgleichsmassen (20, 46) oder -ausnehmungen im wesentlichen ausgeglichen sind.

2. Walze nach Anspruch 1, dadurch gekennzeichnet, daß die Ausgleichsmassen von der Füllung wenigstens eines aus einer Mehrzahl von gleichmäßig über den Umfang des Verdrängerkörpers (36) verteilten Flüssigkeitsbehältern (46) gebildet sind, welche über Rohrleitungen (43) durch einen der Lagerzapfen (31) der Walze beschickbar sind.

3. Walze nach Anspruch 1 oder 2, dadurch gekennzeichnet, daß die Ausgleichsmassen innerhalb der Umfangsfläche des Verdrängerkörpers (6, 7 ; 36) angebracht sind.

4. Walze nach Anspruch 1, 2 oder 3, dadurch gekennzeichnet, daß der Verdrängerkörper (6, 7 ; 36) im Bereich der Ausgleichsmassen bzw. gegenüber den Ausgleichsausnehmungen auf den Walzenmantel (1, 30) abgestützt ist.

## Claims

1. A slender roll of large dimensions for machines for producing endless web material, such as paper machines or film drawing calenders for example, having a roll shell (1, 30) machined inside and outside, having a displacement member (6, 7, 36) which is mounted centrally in the radial direction in the roll shell and which leaves a gap free between itself and the roll shell for the passage of a heat carrying liquid, and having journals (2, 31) which carry the roll shell (1, 30) by means of end flanges (3, 31) and contain the supply and discharge conduits (5, 6, 33, 34) for the heat carrying liquid, characterised in that unbalance at a distance from the lateral ends of the roll shell (1, 30) and/or bending of the roll shell caused by different heat expansions of the roll shell are substantially compensated for by compensating masses (20, 46) or recesses previously provided at appropriate determined points of the displacement member (6, 7, 36).

2. A roll as claimed in claim 1, characterised in that the compensating masses are formed by the filling of at least one of a plurality of liquid containers (46) distributed uniformly over the circumference of the displacement member (36), which containers can be fed via pipelines (43) through one of the journals (31) of the roll.

3. A roll as claimed in claim 1 or 2, characterised in that the compensating masses are provided inside the circumferential surface of the displacement member (6, 7, 36).

4. A roll as claimed in claim 1, 2 or 3, characterised in that the displacement member (6, 7, 36) is supported on the roll shell (1, 30) in the region of the compensation masses or opposite the compensating recesses.

## Revendications

1. Cylindre très allongé, c'est-à-dire présentant de la gracilité, de grandes dimensions, pour machines de fabrication de matière en bande sans fin, par exemple pour machines à papier ou pour calandres d'étirage de matières en feuille mince, qui comporte une enveloppe ou paroi (1, 30), usinée intérieurement et extérieurement, un élément de déplacement ou refoulement (6, 7 ; 36), monté radialement au centre de la paroi du cylindre, élément qui laisse, entre lui et cette paroi, un intervalle pour le passage d'un fluide servant à véhiculer la chaleur, et des tourillons (2, 31) qui, par l'intermédiaire de brides d'extrémité (3, 31), portent la paroi (1, 30) du cylindre et qui contiennent les conduits d'arrivée et de sortie (5, 6 ; 33, 34) pour le fluide servant à véhiculer la chaleur caractérisé en ce que des balourds se présentant à distance des extrémités latérales de la paroi (1, 30) du cylindre et/ou des déformations par flexion de la paroi du cylindre provoquées par des dilatations thermiques différentes de cette paroi sont en substance compensés par des masses d'équilibrage (20, 46) ou par des évidements d'équilibrage prévus d'avance en des endroits convenables, déterminés par le calcul, de l'élément de déplacement ou de refoulement (6, 7 ; 36).

2. Cylindre suivant la revendication 1, caractérisé en ce que les masses d'équilibrage sont formées par le remplissage d'au moins l'un d'une série de récipients à fluide (46) répartis uniformément à la périphérie de l'élément de déplacement ou refoulement (36), récipients qui peuvent être alimentés par l'intermédiaire de conduits (43), par l'un des tourillons (31) du cylindre.

3. Cylindre suivant l'une ou l'autre des revendications 1 et 2, caractérisé en ce que les masses d'équilibrage sont prévues à l'intérieur de la face périphérique de l'élément de déplacement ou refoulement (6, 7 ; 36).

4. Cylindre suivant l'une quelconque de revendications 1, 2 et 3, caractérisé en ce que l'élément de déplacement ou refoulement (6, 7 ; 36), prend appui sur la paroi (1, 30) du cylindre dans la zone des masses d'équilibrage ou en regard des évidements d'équilibrage.

FIG. 1

FIG. 3

FIG. 2

0 118 747